# EUROPEAN PATENT APPLICATION

(11) **EP 1 655 123 A1**
(43) Date of publication of application: **10.05.2006**
(21) Application number: 05020871.9
(22) Date of filing: 24.09.2005
(51) Int. Cl.: B29C 45/26, B29C 45/00

(54) **Mold flash trap, process using and parts made thereby**

(30) Priority: 05.11.2004 US 983216
(71) Applicant: ILLINOIS TOOL WORKS INC., Glenview Illinois 60026-1215 (US)
(72) Inventor: Hayes, Michael S., Homer Glen, Illinois 60491 (US); Schwab, Charles M., Spring Grove, Illinois 60081 (US); Foley, Paul C., Napoleon, Ohio 43545 (US)
(74) Representative: Zech, Stefan Markus

(57) **Abstract**

A mold (14) for forming a part (16), a part (16) formed in the mold (14) and processes for using the mold (14) and forming the part. The mold (14) includes inner (22) and outer (24) mold pieces and a pin (26) extending between the mold pieces to form the part (16) having an internal cavity (18) and an orifice (20) extending into the cavity (18). The inner mold piece (22) defines a pocket (28) for receiving the pin (26). The pocket (28) enables the formation of an annular donut-like projection (40) around the orifice (20) within the cavity.

## Description

### FIELD OF THE INVENTION

The present invention relates generally to molded parts and, more particularly, the invention relates to highly precise parts for applications or installment in a system intolerant of contamination; and molds used for making such parts.

### BACKGROUND OF THE INVENTION

In some applications, parts or components for which plastic is a suitable material have been made of more expensive metal because of the need for precision in the part in combination with the need for system cleanliness. For example, an anti-lock braking system on an automobile typically includes an isolation cartridge and a dump cartridge. Each controls the flow of brake fluid. During normal brake operation, when the brakes are applied the valve in the isolation cartridge opens to allow the brake system to operate the brakes. The valve in the dump cartridge is closed, not allowing any fluid to flow therethrough. When the anti-lock brake system is activated, the valve in the isolation cartridge closes and the valve in the dump cartridge opens. The closed isolation valve isolates the brakes while the opened dump valve allows fluid to flow back to the brake fluid reservoir. Thus, the system allows extremely rapid intermittent operation of the brakes so that the wheels continue to roll and the brakes do not lock. Skids are prevented and stopping distance is shortened. The precision required in the valves is extreme, since openings are necessarily small and even a small variation can cause unacceptable performance. Further, even extremely small contaminants can cause system failure by blocking the small ports or preventing valves from fully functioning between closed and opened positions.

A problem with known systems is that any leakage around the dump seat in the dump cartridge can adversely effect the operation of the brake system. The result can be a long stopping distance or a soft brake pedal feel. Because of the sensitivity of the dump seat, it is typical for the components to be highly machined metal parts, which results in the parts being relatively expensive. To reduce costs, plastic parts have been used. However, the use of plastic is not without difficulties. In known designs for such parts, the required precision of the dump seat makes molding difficult. In areas where mold parts slide or engage one against the other, a small gap in the mold cavity can result in a molded part having thin, weak strands or flaps referred to as flash. Wear and other conditions between the mold parts can also lead to flash.

While tolerable in some applications, the presence of flash in the dump seat of an anti-lock brake system valve is not acceptable. The presence of flash can cause the valve to operate improperly and if the flash breaks loose and enters the brake fluid system, contamination can cause failure or unacceptable performance at numerous locations within the brake system. With the openings or ports as small as they are, even a very small amount of flash can clog or cause failure. Flash removal is difficult, even if separated from the part. If flash is not completely removed from the part, subsequent system contamination can occur.

Thus, there is a need in the art for a process and mold for making plastic parts to eliminate the formation of flash particularly in small, highly precise applications.

### SUMMARY OF THE INVENTION

The present invention provides a mold piece having a pocket around engaging mold parts. The pocket fills only partly with the molten plastic to form a solid, smooth formation without flash.

In one aspect thereof, the present invention provides a mold with a first mold piece defining a pin, and a second mold piece defining a pocket for receiving the pin. The pocket has an opening thereto wider than the pin, an outer region extending inwardly away from the opening, and an inner region snuggly fitting the pin.

In a further aspect thereof, the present invention provides a mold for reducing formation of flash, the mold having a first mold piece, a second mold piece and a pin extending between the first and second mold pieces. At least one of the mold pieces has an end surface and a pocket extending inwardly from the surface. The pocket has a first region adjacent the surface, the first region narrowing inwardly from the surface, and a second region having a diameter for snuggly engaging the pin.

In another aspect thereof, the present invention provides a molded part with a body defining an internal cavity and an orifice through the body providing flow communication between areas ambient to the part and the cavity. The body defines an annular donut-like projection around the orifice within the cavity.

In still another aspect thereof, the present invention provides a process for forming a molded part having a body defining an internal cavity and an orifice through the body into the cavity. The process provides an inner mold piece and an outer mold piece configured one within another to define a space therebetween for forming the part, and a pin extending between the inner and outer mold pieces for defining the orifice in the molded part. The inner mold piece is provided with a pocket for receiving the pin. The pocket is provided with an inwardly extending outer region and an inner region for snuggly engaging the pin. The process includes closing the mold and inserting the pin into the pocket with a narrowing gap around the pin along the outer region of the pocket, and snuggly engaging the pin in the pocket along the inner region of the pocket. Molten material is flowed into the space formed between the inner and outer mold pieces and into the pocket without filling an inner most portion of the outer region of the pocket.

In yet another aspect thereof, the present invention provides a process for using a mold having an inner mold piece, an outer mold piece, a pin extending between the inner and outer mold pieces and a pocket for receiving the pin. The pocket has an inwardly extending outer region and an inner region. The process includes closing the mold and inserting the pin into the pocket with a narrowing gap around the pin along the outer region of the pocket. The pin is engaged snuggly in the pocket along the inner region of the pocket. Molten material is flowed into the space formed between the inner and outer mold pieces and into the pocket without filling an inner most portion of the outer region of the pocket.

An advantage of the present invention is providing a mold to form highly precise molded plastic parts with substantially reduced potential for forming flash.

Another advantage of the present invention is providing a mold that reduces flash formation and thereby simplifies the manufacture of parts at lower cost by eliminating the need for extensive flash cleaning.

Still another advantage of the present invention is providing molded plastic parts that are highly precise and accurate with little or no flash for subsequent removal.

Other features and advantages of the invention will become apparent to those skilled in the art upon review of the following detailed description, claims and drawings in which like numerals are used to designate like features.

### BRIEF DESCRIPTION OF THE DRAWINGS

Fig. 1 is a cross-sectional view of a valve having a part formed in accordance with the present invention;

Fig. 2 is an enlarged fragmentary view of the area indicated by numeral 2 in Fig. 1; and

Fig. 3 is a cross-sectional view of the molded part shown in Fig. 2 within a mold in accordance with the present invention for forming the part illustrated.

Fig. 4 is a cross-sectional view of an alternative embodiment of a mold in accordance with the present invention.

Before the embodiments of the invention are explained in detail, it is to be understood that the invention is not limited in its application to the details of construction and the arrangements of the components set forth in the following description or illustrated in the drawings. The invention is capable of other embodiments and of being practiced or being carried out in various ways. Also, it is understood that the phraseology and terminology used herein are for the purpose of description and should not be regarded as limiting. The use herein of "including", "comprising" and variations thereof is meant to encompass the items listed thereafter and equivalents thereof, as well as additional items and equivalents thereof.

### DETAILED DESCRIPTION OF THE PREFERRED EMBODIMENT

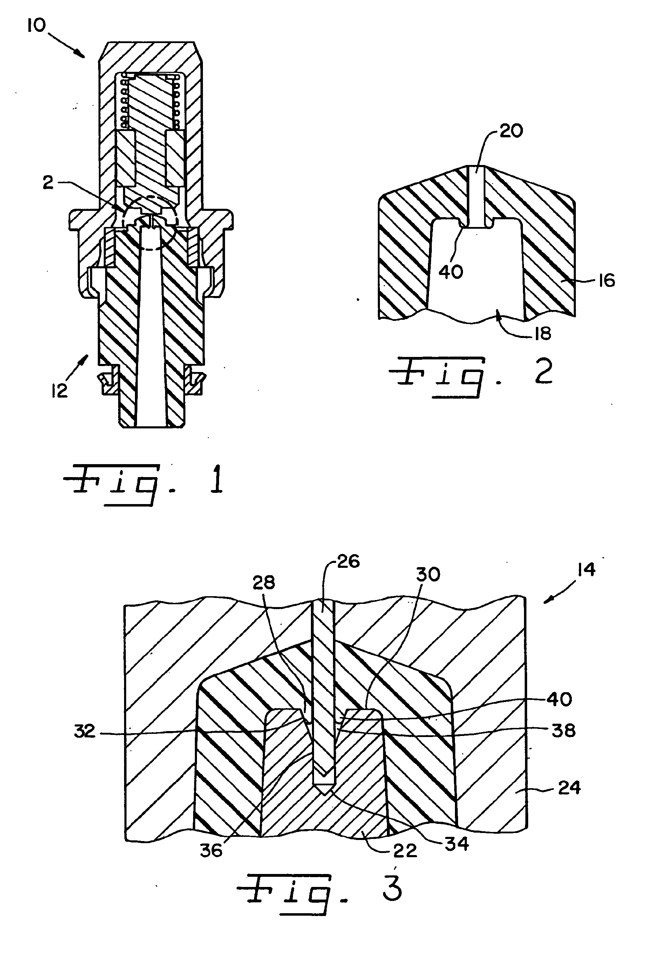

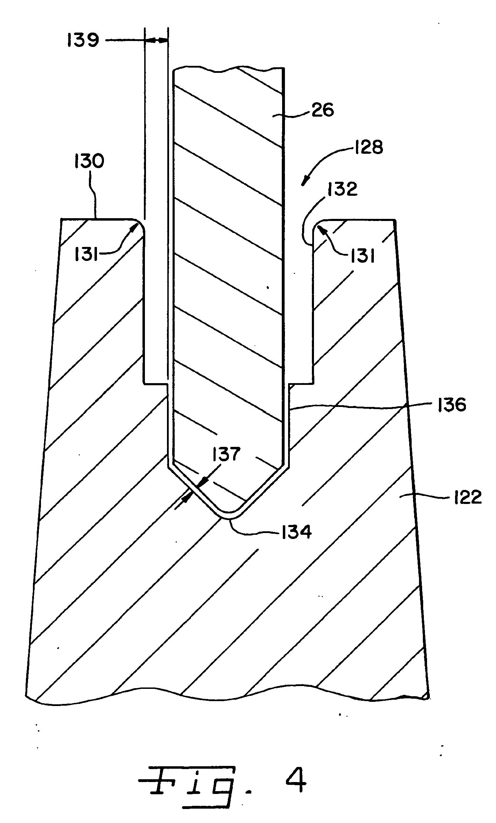

Referring now more specifically to the drawings and to Fig. 1 in particular, numeral 10 designates a valve having a molded part 12 in accordance with the present invention. Part 12 is formed in a mold 14 (Fig. 3) of the present invention. It should be understood that the present invention can be used for molding a variety of different parts including part 12 in valve 10. However, the present invention can also be used for forming parts other than parts for valves and can be used for forming parts of a variety of shapes, types and sizes. Further, the present invention can be utilized with a variety of plastics or other molded material for a variety of uses, purposes and applications. The invention can be used advantageously for producing many parts in which a reduction in the formation of flash is desirable.

Part 12 includes a body 16 defining an internal cavity 18 and an orifice or through hole 20 that is small in diameter and precise in specification. Orifice 20 extends through body 16 and establishes a path of fluid flow communication between cavity 18 and an area ambient to part 12, but which is internal in valve 10. As depicted in the drawings, valve 12 is a valve in an antilock brake system, and the diameter and shape of orifice 20 cannot vary significantly from one part 12 to the next part 12 formed during the molding process. Part 12 must be clean and solid to prevent contamination of the brake system.

Mold 14 is used to form part 12 and includes an inner mold piece 22, an outer mold piece 24 and a pin 26. When mold 14 is closed, inner mold piece 22 and outer mold piece 24 are in spaced relation to define a space in which molten plastic is injected to form part 12. Outer mold piece 24 generally defines the external configuration of part 12, and inner mold piece 22 generally defines the configuration of cavity 18. Pin 26 extends from outer mold piece 24 and into a pocket 28 of inner mold piece 22. It should be understood that pin 26 may be integral with or fixedly secured to outer mold piece 24, and is insertable into a withdrawable from pocket 28 of inner mold piece 22. As inner mold piece 22 and outer mold piece 24 are separated, pin 26 is extracted from pocket 28 and also from part 12 formed in mold 14. Pin 26 thereby forms and configures orifice 20. The manner in which inner and outer mold pieces 22 and 24 and a variety of pins 26 can be used to form different parts are well-known to those skilled in the molding industry and will not be described in further detail herein.

Inner mold piece 22 has a surface 30 at which pocket 28 is accessed for inserting pin 26. Pocket 28 has a larger diameter at surface 30 and tapers inwardly along its length away from surface 30 to defme a conical outer region 32 extending inwardly part of the distance from surface 30 to a bottom 34 of pocket 28. With mold 14 closed, and pin 26 inserted in pocket 28, pin 26 fits snuggly in an inner region 36 of pocket 28 near bottom 34, but is loosely spaced from the conical outer region 32 immediately inwardly from surface 30. The snug fit of pin 26 within at least a portion of inner region 36 is substantially airtight.

The width and taper angle of outer region 32 is selected so that molten material flowing into mold 14 will only partly fill outer region 32 around pin 26 before solidifying. For a plastic seat in a dump valve for an anti-lock brake system of an automobile, a suitable configuration for outer region 32 provides an annular gap of approximately 0.30mm width around pin 26 at surface 30, and a taper angle of about 15°. Pin 26 fits substantially airtight along inner region 36 for a distance of at least about 0.28 inch.

When molten plastic material flows into the space defined between inner mold piece 22 and outer mold piece 24, the fluid plastic flows into outer region 32 and around pin 26. However, the plastic material solidifies before completely filling conical region 32, and never completely fills the conical void between inner mold piece 22 and pin 26, leaving a void 38 at the inner-most portion of conical outer region 32. In the completed part 12, as seen most clearly in the enlarged cross-sectional view of Fig. 2, a smoothly formed donut-like projection 40 is formed from the molten material for part 12 flowing into, but not completely filling conical outer region 32.

During use, insertion and withdrawal of pin 26 into and out of pocket 28 can cause wear on the confronting surfaces of pin 26 and inner mold piece 22 within pocket 28. Wear, when it occurs is in the contacting surfaces can cause small irregularities in the precisely formed surfaces of mold 14. Although, it should be noted that a very small space is provided between the mold pieces so as to accommodate thermal expansion during the molding process. If molten plastic contacts the irregular surfaces, as the part is made, flash can be formed. In accordance with the present invention, as part 12 is being formed in mold 14, the molten material of part 12 does not reach the confronting surfaces of pin 26 within pocket 28. Thus, even if wear occurs on the confronting surfaces, molten plastic material of part 12 does not flow into the irregular surfaces and the formation of flash is prevented.

Illustrated in Fig. 4 is an alternative embodiment according to the principles of the present invention. Rather than the tapered, conical flash trap 28 described in reference to Figs. 1-3, the flash trap 128 shown in Fig. 4 has a rectangular cross-section to define a substantially cylindrical pocket or trap around pin 126. Inner mold piece 122 has a surface 130 at which pocket 128 is accessed for inserting pin 26. Surface 130 preferably includes a radius or chamfered entry edge 131. Pocket 128 has a larger diameter at surface 130 and extends inwardly along its length away from surface 130 to define a cylindrical outer region 132 extending inwardly part of the distance from surface 130 to a bottom 134 of pocket 128. With mold 14 closed, and pin 26 inserted in pocket 128, pin 26 fits snuggly in an inner region 136 of pocket 128 near bottom 134, but is loosely spaced from the cylindrical outer region 132 immediately inwardly from surface 130. The snug fit of pin 26 within at least a portion of inner region 136 is substantially airtight. However, a very small gap 137 between the pin 26 and inner region 136 of about 0.25 mm is preferably provided to allow for thermal expansion during the molding process.

As previously described in accordance with Figs. 1-3, the width and shape of outer region 132 is selected so that molten material flowing into mold 14 will only partly fill outer region 132 around pin 26 before solidifying. For a plastic seat in a dump valve for an anti-lock brake system of an automobile, a suitable configuration for outer region 132 provides an annular gap 139 of approximately 0.085 mm around pin 26 at surface 130. Pin 26 fits substantially airtight along inner region 136 for a distance of at least about 0.25 mm. In one embodiment, outer region 132 has a length of about .75 mm.

Although the invention has been described in connection with a vehicle anti-lock braking system, the invention is capable of use in other applications, and the anti-lock braking system mentioned herein is merely shown and described as an example of one such application. Moreover, the dimensions shown and described herein are for illustrative purposes only, as the invention contemplates various other shapes and sizes for the flash trap and associated components according to the principles of the present invention.

The present invention provides molded parts without flash, thereby reducing the need for flash cleaning. Molded parts are provided at lower manufacturing cost. Loose contamination from separated flash is prevented, improving performance reliability of the part.

Variations and modifications of the foregoing are within the scope of the present invention. It is understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention. The claims are to be construed to include alternative embodiments to the extent permitted by the prior art.

Various features of the invention are set forth in the following claims.

## Claims

1. A mold for molding objects, comprising:
a first mold piece defining a pin, and a second mold piece defining a pocket for receiving said pin; and
said pocket having an opening thereto wider than said pin, an outer region extending inwardly away from said opening, and an inner region snuggly fitting said pin.

2. The mold of claim 1, said pocket engaging said pin in a substantially airtight engagement inwardly in said pocket from said outer region.

3. The mold of claim 1, said outer region tapering inwardly from said opening at an angle of about 15°.

4. The mold of claim 3, said opening providing an annular gap around said pin of approximately 0.30 mm in width.

5. The mold of claim 1, said outer region forming a cylindrical pocket.

6. The mold of claim 5, said opening providing an annular gap around said pin of approximately 0.085 mm in width.

7. The mold of claim 6, said inner region and said pin defining a gap therebetween of about 0.25 mm.

8. A mold for reducing formation of flash, said mold having a first mold piece, a second mold piece and a pin extending between said first and second mold pieces, said mold comprising:
at least one of said mold pieces having an end surface and a pocket extending inwardly from said surface, said pocket including;
a first region adjacent said surface, said first region extending inwardly from said surface; and
a second region having a diameter for snuggly engaging the pin.

9. The mold of claim 8, said second region having a diameter for engaging the pin in a substantially air tight engagement.

10. The mold of claim 8, said first region tapering inwardly from said surface at an angle of approximately 15°.

11. The mold of claim 10, said first region defining an opening in said surface, said opening having a radius of approximately 0.30 mm greater than a radius of the pin.

12. The mold of claim 8, said first region forming a cylindrical pocket.

13. The mold of claim 12, said first region defining an opening in said surface, said opening having a radius of approximately 0.085 mm greater than a radius of the pin.

14. The mold of claim 8, said first region defining an opening in said surface, said opening having a radius of approximately 0.30 mm greater than a radius of the pin.

15. The mold of claim 8, said pocket having a bottom, and said second region having a diameter for engaging the pin in a substantially air tight engagement.

16. A molded part having a body defining an internal cavity and an orifice through said body providing flow communication between areas external to said part and said cavity, said body defining an annular donut-like projection around said orifice within said cavity.

17. A process for forming a molded part having a body defining an internal cavity and an orifice through said body into said cavity, said process comprising:
providing an inner mold piece and an outer mold piece configured one within another to define a space therebetween for forming the part, and a pin extending between the inner and outer mold pieces for defining the orifice in the molded part;
providing said inner mold piece with a pocket for receiving the pin;
providing an inwardly extending outer region of the pocket and an inner region in the pocket for snuggly engaging the pin;
closing the mold including inserting the pin into the pocket with a gap around the pin along the outer region of the pocket, and snuggly engaging the pin in the pocket along the inner region of the pocket; and
flowing molten material into the space formed between the inner and outer mold pieces and into the pocket without filling an inner most portion of the outer region of the pocket.

18. The process of claim 17, including engaging the pin in the pocket along the inner region of the pocket in a substantially airtight engagement.

19. A process for using a mold having an inner mold piece and an outer mold piece configured one within another to define a space therebetween for forming a part, and a pin extending between the inner and outer mold pieces for defining an orifice in the part, the inner mold piece having a pocket for receiving the pin, the pocket having an inwardly extending outer region and an inner region; said process including steps of:
closing the mold including inserting the pin into the pocket with a gap around the pin along the outer region of the pocket, and snuggly engaging the pin in the pocket along the inner region of the pocket; and
flowing molten material into the space formed between the inner and outer mold pieces and into the pocket without filling an inner most portion of the outer region of the pocket.

20. The process of claim 19, including engaging the pin in the pocket along the inner region of the pocket in a substantially airtight engagement.

21. Apparatus for using a mold having an inner mold piece and an outer mold piece configured one within another to define a space therebetween for forming a part, and a pin extending between the inner and outer mold pieces for defining an orifice in the part, the inner mold piece having a pocket for receiving the pin, the pocket having an inwardly extending outer region and an inner region; comprising:
means for closing the mold including inserting the pin into the pocket with a gap around the pin along the outer region of the pocket, and snuggly engaging the pin in the pocket along the inner region of the pocket; and
means for flowing molten material into the space formed between the inner and outer mold pieces and into the pocket without filling an inner most portion of the outer region of the pocket.
